(19) Europäisches Patentamt
European Patent Office
Office européen des brevets

(11) **EP 2 171 713 B1**

(12) **FASCICULE DE BREVET EUROPEEN**

(45) Date de publication et mention de la délivrance du brevet:
**16.03.2011 Bulletin 2011/11**

(21) Numéro de dépôt: **08805994.4**

(22) Date de dépôt: **13.06.2008**

(51) Int Cl.:
***G10L 19/14*** *(2006.01)*

(86) Numéro de dépôt international:
**PCT/FR2008/051059**

(87) Numéro de publication internationale:
**WO 2009/004227 (08.01.2009 Gazette 2009/02)**

(54) **CODAGE DE SIGNAUX AUDIONUMÉRIQUES**

KODIERUNG DIGITALER AUDIOSIGNALE

CODING OF DIGITAL AUDIO SIGNALS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.06.2007 PCT/FR2007/557792**

(43) Date de publication de la demande:
**07.04.2010 Bulletin 2010/14**

(73) Titulaire: **FRANCE TELECOM**
**75015 Paris (FR)**

(72) Inventeurs:
- **KOVESI, Balazs**
  **F-22300 Lannion (FR)**
- **LE GUYADER, Alain**
  **F-22300 Lannion (FR)**
- **RAGOT, Stéphane**
  **F-22300 Lannion (FR)**

(56) Documents cités:
**EP-A2- 0 331 405     EP-A2- 0 466 190**
**EP-A2- 0 632 597**

- **JUIN-HWEY CHEN: "Novel Codec Structures for Noise Feedback Coding of Speech" ACOUSTICS, SPEECH AND SIGNAL PROCESSING, 2006. ICASSP 2006 PROCEEDINGS. 2006 IEEE INTERNATIONAL CONFERENCE ON TOULOUSE, FRANCE 14-19 MAY 2006, PISCATAWAY, NJ, USA,IEEE, 14 mai 2006 (2006-05-14), pages I-681, XP010930271 ISBN: 1-4244-0469-X cité dans la demande**

EP 2 171 713 B1

**Description**

La présente invention concerne un traitement de données sonores.

Ce traitement est adapté notamment pour la transmission et/ou au stockage de signaux numériques tels que des signaux audiofréquences (parole, musique ou autres).

La présente invention se rapporte plus particulièrement au codage de formes d'onde tel que le codage MIC (pour "Modulation par Impulsions Codées") dit PCM (pour *"Pulse Code Modulation"*) en anglais.

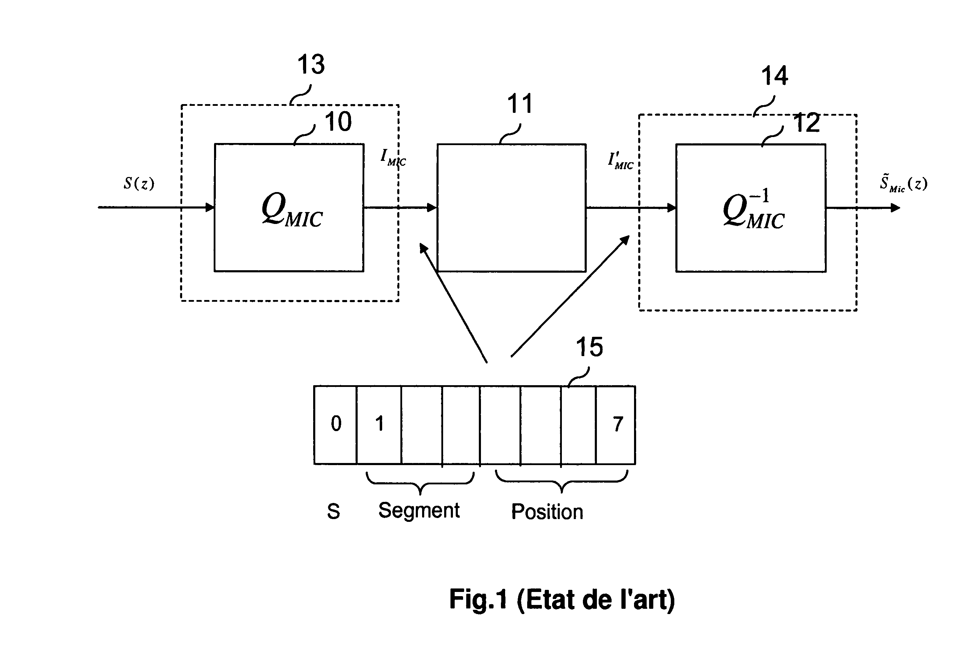

Le principe général du codage/décodage MIC spécifié par la recommandation UIT-T G.711 est tel que décrit en référence à la **figure 1.**

Le codeur MIC 13 comporte un module de quantification $Q_{MIC}$ 10 qui reçoit en entrée le signal d'entrée S(z). L'indice de quantification $I_{MIC}$ en sortie du module de quantification 10 est transmis via le canal de transmission 11 au décodeur 14.

Le décodeur MIC 14 reçoit en entrée les indices $I_{MIC}$ issu du canal de transmission, version éventuellement perturbée par des erreurs binaires de $I_{MIC}$, et réalise une quantification inverse par le module de quantification inverse $Q^{-1}_{MIC}$ 12 pour obtenir le signal codé $\hat{S}_{MIC}(z)$.

Le codage MIC normalisé UIT-T G.711 (ci-après nommé G.711) réalise une compression de l'amplitude des signaux - qui sont définis avec une largeur de bande minimale de [300-3400 Hz] et échantillonnés à 8 kHz - par une courbe logarithmique qui permet d'obtenir un rapport signal à bruit à peu près constant pour une large dynamique de signaux. Le pas de quantification dans le domaine du signal original est proportionnel à l'amplitude des signaux.

Le signal compressé est quantifié sur 8 bits soit 256 niveaux. Dans le réseau téléphonique commuté (RTC) dit *Public Switched Telephone Network* (PSTN) en anglais, ces 8 bits sont transmis à une fréquence de 8 kHz pour donner un débit de 64 kbits/s.

Une trame de signal quantifié selon la norme G.711 est constituée d'indices de quantification codés sur 8 bits. Ainsi, si la quantification inverse est implantée par table, elle consiste simplement à un pointage par l'indice de l'une des 256 valeurs décodées possibles.

Dans la norme G.711 suivant la "loi A" en Europe ou la "loi mu ($\mu$)" en Amérique du Nord et au Japon, les 8 bits sont répartis de la façon suivante telle que représenté en 15 à la figure 1:

1 bit de signe S, 3 bits pour indiquer le segment et 4 bits pour indiquer l'emplacement sur le segment.

L'étape de quantification du codeur engendre un bruit de quantification qui est la différence entre le signal original et le signal décodé.

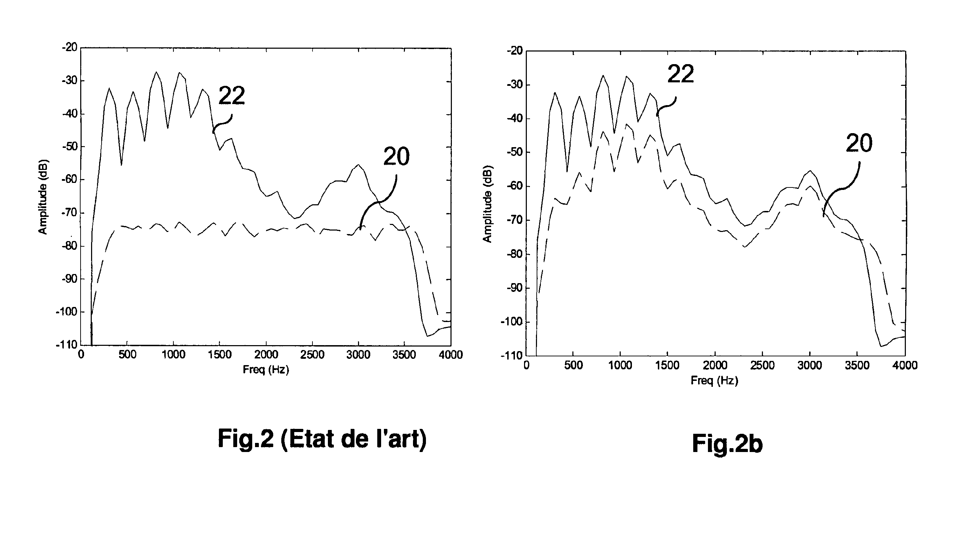

Avec un grand nombre de niveaux de quantification (256), le bruit de quantification a un spectre relativement plat comme peut le montrer la **figure 2** sous la référence 20. Le spectre du signal est représenté en 22 sur la figure 2 (ici un bloc de signal voisé) ayant une grande dynamique ($\sim$40dB). On peut voir que dans les zones de faible énergie, le bruit est très proche du signal et n'est donc plus forcément masqué. Il peut alors devenir audible dans ces régions (de 2300 à 3500 Hz).

Dans le cas des codeurs prédictifs adaptatifs de parole, des techniques de mise en forme du bruit de quantification ont été mises en oeuvre pour masquer ce bruit et dans la mesure du possible le rendre inaudible. En effet, de par les propriétés de masquage fréquentiel simultané de l'oreille humaine, il est possible d'injecter plus de bruit de quantification dans les zones où le signal est plus énergétique. La mise en forme du bruit consiste à mieux répartir spectralement le bruit de quantification en diminuant le niveau du bruit de quantification dans les zones peu énergétiques pour le redistribuer dans les zones plus énergétiques.

Une telle technique est par exemple décrite dans le document "Adaptive noise spectral shaping and entropy coding in prédictive coding of speech" de J.Makhoul, M.Berouti dans IEEE Trans. ASSP, Vol.27-3, June 1979.

Ce document décrit l'utilisation de filtres linéaires prenant en compte le signal reconstruit. Le filtre de mise en forme du bruit de quantification est dérivé du filtre de prédiction linéaire de synthèse dit *linear predictive coding (LPC) synthesis filter* en anglais. Ainsi, la trame obtenue en sortie de ce type de codeur comporte des indices de coefficients de prédiction linéaire des filtres, un indice de facteur de normalisation de gain et les indices de quantification. D'autres exemples de méthodes de mise en forme du bruit dans un coder prédictif sont décrits dans EP033/405, EP0466190, et EP0632597.

De plus, dans la référence précédente le filtre de mise en forme du bruit est calculé à partir du filtre de synthèse reconstruit à partir des indices de coefficients de prédiction linéaire. Le filtre de mise en forme du bruit sera donc entaché du bruit de codage des coefficients de prédiction linéaire. De plus, dans la référence citée, la fonction de transfert du filtre de mise en forme ne possède des coefficients qu'au numérateur, calculés par deux prédictions linéaires en cascade. Les deux prédictions linéaires en cascade apportant chacune leur part d'imprécision il en résulte, comme clairement indiqué dans la référence citée, que la mise en forme de bruit n'est effective que pour un nombre de coefficients au plus égal à 2.

**EP 2 171 713 B1**

L'article de Makhoul et Berouti montre que la mise en forme du bruit de quantification est possible dans les systèmes prédictifs adaptatifs caractérisés par un modèle de synthèse constitué d'un quantificateur inverse et d'un filtre prédicteur à court-terme. Les filtres de synthèse sont utilisés dans la structure de codage pour obtenir la mise en forme adéquate.

Cette technique n'est donc pas adaptée aux codeurs non prédictifs qui ne présentent pas de filtres de synthèse comme le codeur MIC (en particulier G.711). En effet la quantification incluant une mise en forme - telle que décrite dans l'article de Makhoul et Berouti - est réalisée dans le domaine du résidu de prédiction linéaire (ou excitation), c'est-à-dire après filtrage du signal original par un filtre prédicteur A(z). Les coefficients du filtre A(z) doivent donc être transmis au décodeur pour réaliser un filtrage de synthèse 1/A(z) après quantification inverse. De plus, la mise en forme du bruit est réalisée via une fonction B(z) réduite à l'ordre 2 et déduite de la fonction A(z) transmise.

La remarque précédente s'applique à l'article, J. H. Chen. "Novel codec structures for noise feedback coding of speech". Proc. Of ICASSP, 2006, PP.I-681:I-684, qui reprend l'article Makouhl et Berouti en y incorporant un prédicteur à long-terme et une mise en forme du bruit de quantification par un filtre de mise en forme à long-terme. De plus dans l'article de Chen et al., la quantification mise en oeuvre est de type vectorielle.

La présente invention offre une solution qui ne présente pas les inconvénients de l'état de l'art.

A cet effet, l'invention propose un procédé de codage d'un signal audio d'entrée dans lequel ledit signal audio d'entrée est combiné à un signal intermédiaire de contre-réaction formant un signal d'entrée modifié et comportant une étape de quantification scalable en débit dudit signal d'entrée modifié, délivrant une trame binaire d'indices de quantification d'un débit prédéterminé, tel qu'il comporte en outre, les étapes suivantes:

- quantification inverse d'une partie des indices de quantification de la trame binaire correspondant aux indices d'un débit inférieur au débit prédéterminé, pour déterminer un signal reconstruit;
- détermination d'un bruit de quantification engendré au moins par la succession de l'étape de quantification et quantification inverse;
- détermination d'une fonction de filtrage du bruit de quantification à partir dudit signal reconstruit;
- application de ladite fonction de filtrage audit bruit de quantification pour obtenir ledit signal intermédiaire de contre-réaction.

Ainsi, le procédé selon l'invention permet d'obtenir une trame d'indices de quantification susceptible d'être décodée par des décodeurs existants de type MIC G.711. Le procédé selon l'invention permet d'augmenter la qualité d'écoute de la trame ainsi obtenue par la prise en compte du bruit de quantification, tout en gardant l'interopérabilité avec les décodeurs existants.

Une mise en forme du bruit de quantification est ainsi obtenue par la détermination d'une fonction de filtrage adéquate.

La trame binaire est constituée uniquement d'indices de quantification scalaire représentant individuellement chaque échantillon du signal, sans avoir à transmettre des coefficients de prédiction linéaires.

Cette mise en forme ne nécessite donc pas de transmission de coefficients au décodeur et peut être mise en oeuvre par un codeur de type MIC sans filtre de synthèse.

La présente invention permet de mettre en oeuvre la mise en forme du bruit de quantification seulement sur une quantification à débit minimum (débit coeur), avantageusement un quantificateur MIC G.711, dans le cas par exemple d'un codeur à codes imbriqués. Ainsi au décodage, en fonction du débit alloué, il est possible de ne décoder qu'une partie du signal par une quantification inverse de débit coeur tout en bénéficiant de l'amélioration de la qualité du signal par mise en forme du bruit de quantification.

Dans un mode particulier de réalisation, l'étape de quantification scalable en débit fournit au minimum des indices de quantification de débit coeur correspondant à un codage coeur de type codage MIC interopérable avec la norme IUT-T G.711 loi A ou mu.

Dans un mode de réalisation de l'invention, la fonction de filtrage est déterminée par l'agencement de deux filtres de prédiction linéaire dont les coefficients sont déterminés à partir du signal reconstruit.

Ainsi, par cette mise en oeuvre, il est possible d'introduire un perfectionnement du coté du décodeur en appliquant le calcul de filtres à partir du signal reconstruit de la même façon qu'au codeur. Il n'est alors pas nécessaire de transmettre d'informations supplémentaires pour le calcul des filtres.

Dans un autre mode de réalisation de l'invention, la fonction de filtrage est déterminée par l'agencement de deux filtres de prédiction linéaire dont les coefficients sont déterminés à partir du signal d'entrée.

Ainsi, les coefficients pris en compte pour le calcul de la fonction de filtrage du bruit de quantification ne dépendent pas des filtres de synthèse codés, donc dégradés qui modélisent le signal mais dépendent directement du signal d'entrée. La mise en forme du bruit sera donc plus adaptée.

Dans un mode particulier de réalisation, ledit signal intermédiaire de contre-réaction est calculé à partir d'une prédiction du bruit de quantification et d'une prédiction du bruit de quantification filtré, le bruit de quantification filtré étant obtenu par addition du signal intermédiaire et du bruit de quantification.

Dans un mode particulier de réalisation, la fonction de filtrage du bruit de quantification est un filtre Autorégressif à Moyenne Ajustée (ARMA).

Cette fonction de pondération étant sous la forme d'un filtre avec des coefficients au numérateur ainsi qu'au dénominateur sans limitation du nombre de coefficients du numérateur à 2, permet d'améliorer la mise en forme du bruit.

Dans un mode de réalisation de l'invention, la fonction de pondération du bruit de quantification est calculée en outre à partir de caractéristiques de périodicité du signal d'entrée.

Une fonction de pondération prenant en compte les caractéristiques de périodicité du signal permet d'apporter une modulation supplémentaire sur le bruit aux endroits où le bruit est plus important, par exemple entre les harmoniques du signal.

L'invention est particulièrement adaptée dans le cas où la trame d'indices de quantification est conforme à la norme ITU G.711 loi A ou loi mu.

Dans un mode de réalisation de vol de bits, l'étape de quantification scalable d'un débit prédéterminé est une quantification scalaire MIC interopérable avec la norme IUT-T G.711 loi A ou mu, l'étape de quantification inverse des indices de débit inférieur au débit prédéterminé s'applique sur 8-K bits de la trame binaire pour déterminer un signal reconstruit et en ce qu'une étape d'insertion de K bits de données est en outre effectuée.

L'invention se rapporte également à un codeur de signal audio d'entrée comportant un module de combinaison combinant le signal audio d'entrée à un signal intermédiaire de contre-réaction formant un signal d'entrée modifié et un module de quantification scalable en débit dudit signal d'entrée modifié, délivrant une trame binaire d'indices de quantification d'un débit prédéterminé. Ce codeur est tel qu'il comporte en outre:

- un module de quantification inverse d'une partie des indices de quantification de la trame binaire correspondant aux indices d'un débit inférieur au débit prédéterminé, pour déterminer un signal reconstruit;
- un module de détermination d'un bruit de quantification ($Q_{MIC}(z)$) issu au moins des modules de quantification et de quantification inverse en cascade;
- un module de détermination d'une fonction de filtrage du bruit de quantification à partir dudit signal reconstruit; et
- un module de filtrage apte à appliquer de ladite fonction de filtrage audit bruit de quantification pour obtenir ledit signal intermédiaire de contre-réaction.

Avantageusement dans le cas du codeur imbriqué le module de quantification inverse de débit inférieur est de type MIC normalisé UIT-T G.711.

L'invention porte également sur un procédé de décodage scalable d'un signal audio comportant:

- une première étape de quantification inverse décodant des indices de quantification d'un premier débit dit débit coeur, pour former un signal reconstruit;
- une seconde étape de quantification inverse décodant des indices de quantification d'un second débit supérieur au débit coeur, mise en oeuvre en fonction du débit reçu au décodage, pour former un signal reconstruit de débit supérieur.

Le procédé est tel qu'il comporte en outre

- une étape d'obtention d'un signal différence entre ledit signal reconstruit de débit coeur et ledit signal reconstruit de débit supérieur;
- une étape de détermination d'une fonction de filtrage de correction à partir du signal reconstruit de débit coeur;
- une étape d'application de ladite fonction de filtrage de correction audit signal de différence pour obtenir un terme correctif;
- une étape de synthèse d'un signal corrigé reconstruit à débit supérieur en combinant ledit terme correctif et un des signaux reconstruit.

Ainsi au décodage, en fonction du débit alloué, il est possible de ne décoder qu'une partie du signal par une quantification inverse de débit coeur tout en bénéficiant de l'amélioration de la qualité du signal par mise en forme du bruit de quantification.

Dans un mode de réalisation, ledit terme correctif est appliqué audit signal reconstruit de débit coeur.

Dans un autre mode de réalisation, ledit terme correctif est appliqué audit signal reconstruit de débit supérieur.

L'invention se rapporte à un décodeur d'un signal audio comportant:

- une premier module de quantification inverse décodant des indices de quantification d'un premier débit dit débit coeur, pour former un signal reconstruit;

- un second module de quantification inverse décodant des indices de quantification d'un second débit supérieur au débit coeur, mise en oeuvre en fonction du débit reçu au décodage, pour former un signal reconstruit de débit supérieur.

Le décodeur est tel qu'il comporte en outre

- un module d'obtention d'un signal différence entre ledit signal reconstruit de débit coeur et ledit signal reconstruit de débit supérieur;
- un module de détermination d'une fonction de filtrage de correction à partir du signal reconstruit de débit coeur;
- un module de filtrage apte à appliquer ladite fonction de filtrage de correction audit signal de différence pour obtenir un terme correctif;
- un module de synthèse d'un signal corrigé reconstruit à débit supérieur apte à combiner ledit terme correctif et un des signaux reconstruit.

Enfin, l'invention porte sur un programme d'ordinateur destiné à être stocké dans une mémoire d'un codeur ou d'un décodeur et/ou sur un support mémoire apte à coopérer avec un lecteur du codeur ou du décodeur, comportant des instructions de code pour la mise en oeuvre des étapes du procédé de codage selon l'une des revendications 1 à 5,et/ou du procédé de décodage selon l'une des revendications 6 à 8, lorsque ledit programme est exécuté par un processeur du codeur ou du décodeur.

D'autres caractéristiques et avantages de l'invention apparaîtront plus clairement à la lecture de la description suivante, donnée uniquement à titre d'exemple non limitatif, et faite en référence aux dessins annexés, sur lesquels:

- la figure 1 illustre un système de codage/décodage MIC G.711 classique de l'état de l'art;
- la figure 2 représente un spectre d'un bloc de signal par rapport au spectre d'un bruit de quantification présent dans un codeur n'implémentant pas la présente invention;
- la figure 2b représente un spectre d'un bloc de signal par rapport au spectre d'un bruit de quantification présent dans un codeur selon l'invention;
- la figure 3 représente un schéma bloc général d'un codeur selon l'invention et d'un décodeur adapté;
- la figure 4 représente un schéma bloc d'un premier mode de réalisation d'un codeur selon l'invention et d'un décodeur adapté;
- la figure 5 représente un schéma bloc d'un second mode de réalisation d'un codeur selon l'invention et d'un décodeur adapté;
- la figure 6 représente un organigramme représentant les étapes d'un premier mode de calcul d'un filtre de mise en forme du bruit de quantification selon l'invention;
- la figure 7 représente un organigramme représentant les étapes d'un second mode de calcul d'un filtre de mise en forme du bruit de quantification selon l'invention;
- la figure 8 représente un organigramme représentant les étapes d'un troisième mode de calcul d'un filtre de mise en forme du bruit de quantification selon l'invention;
- la figure 9 représente un schéma bloc d'un codeur selon l'invention avec quantificateur à structure imbriquée et d'un décodeur adapté;
- la figure 10 représente un schéma bloc d'une variante de réalisation d'un codeur selon l'invention avec quantificateur à structure imbriqué et d'un décodeur adapté;
- la figure 11 représente un schéma bloc d'un autre mode de réalisation d'un codeur selon l'invention et d'un décodeur adapté; et
- la figure 12 représente un schéma bloc d'un autre mode de réalisation d'un codeur selon l'invention et d'un décodeur adapté en situation de vol de bit.

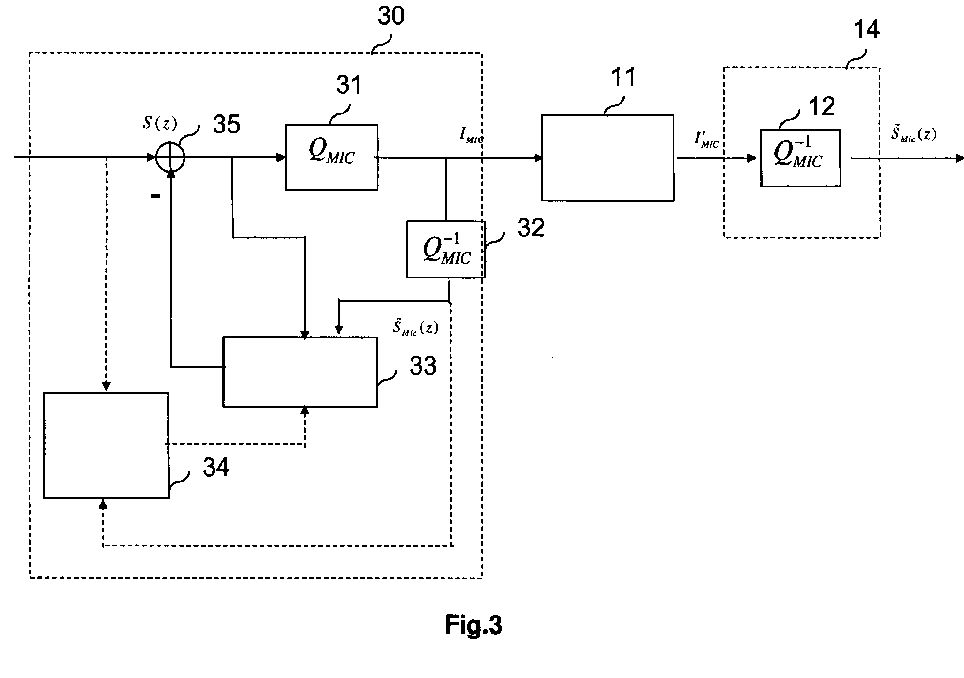

En référence à la **figure 3**, un codeur 30 selon l'invention va maintenant être décrit. Le décodeur 14 correspondant est un décodeur classique tel que décrit en référence à la figure 1 qui comporte un module de quantification inverse 12, qui dans un mode préféré de réalisation est un quantificateur MIC inverse.

Le codeur 30 comporte un module de quantification 31, dans un mode préféré de réalisation, un quantificateur MIC. Il comporte également un module de quantification inverse 32, de préférence de type MIC.

Une boucle de contre réaction comporte selon l'invention, un module 33 de mise en forme du bruit de quantification. Pour cela, ce module reçoit en entrée à la fois le signal en entrée du quantificateur et le signal $\tilde{S}_{MIC}(z)$ issu du module de quantification inverse pour obtenir le bruit de quantification. Ce module détermine une fonction de pondération à appliquer au bruit de quantification. On remarque qu'aucun coefficient de filtre ou autre paramètre servant à la mise en forme du bruit de quantification n'est transmis.

Cette fonction de pondération peut être constante et fixée une fois pour toute, indépendamment du signal d'entrée.

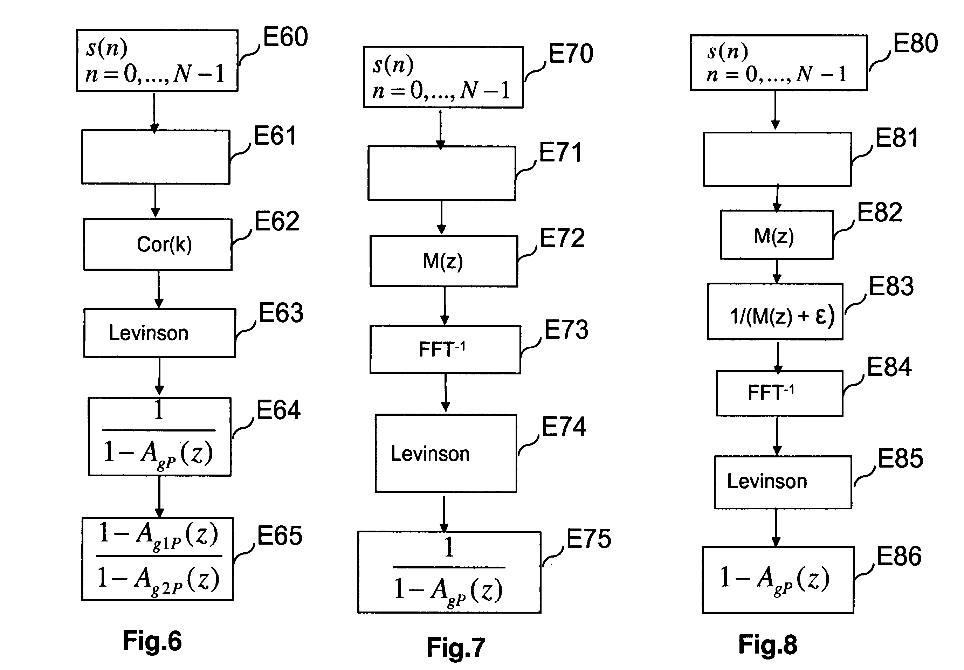

Optionnellement, elle peut être adaptée par un module d'adaptation 34 qui reçoit en entrée le signal d'entrée à coder et/ou le signal en sortie du quantificateur inverse. Les calculs mis en oeuvre par ce module d'adaptation sont du type prédiction linéaire. Ils seront détaillés en référence aux figures 6, 7 et 8.

Le bruit de quantification ainsi pondéré est ensuite combiné au signal d'entrée en 35. Le signal combiné est fourni en entrée du quantificateur 31 qui fourni au canal de transmission 11, une trame d'indices de quantification de type trame G.711 tel que défini en référence à la figure 1 c'est-à-dire 8 bits (signe, numéro de segment et position sur le segment).

Cette figure 3 est également une illustration des principales étapes du procédé selon l'invention mises en oeuvre par le codeur.

Ainsi, le codeur met en oeuvre le procédé selon l'invention qui comporte les étapes de :

- quantification scalaire des échantillons du signal d'entrée combiné avec un signal intermédiaire de contre-réaction pour obtenir des indices de quantification constituant une trame binaire d'indices de quantification;
- détermination d'un signal reconstruit à partir des indices de quantification par une étape de quantification scalaire inverse;
- détermination d'un bruit de quantification engendré par la succession de l'étape de quantification et de quantification inverse;
- détermination d'une fonction de pondération du bruit de quantification;
- application de ladite fonction de pondération au bruit de quantification pour obtenir le dit signal intermédiaire de contre-réaction correspondant au bruit de quantification pondéré.

Un programme d'ordinateur destiné à être stocké dans une mémoire du codeur et/ou sur un support mémoire apte à coopérer avec un lecteur du codeur, comportent des instructions de code pour la mise en oeuvre des étapes du procédé selon l'invention lorsque ledit programme est exécuté par un processeur du codeur.

Ainsi, le décodeur classique 14 peut sans modifications décoder le signal l'$_{MIC}$ reçu tout en bénéficiant de l'amélioration de la qualité obtenu par la mise en forme du bruit mis en oeuvre dans le codeur 30.

Dans une autre application possible, il est possible lors de la transmission entre le codeur et le décodeur de ne pas prendre en compte un ou plusieurs bits ou encore d'utiliser un ou plusieurs bits pour transmettre d'autres données que celles issues du codage. Dans ce cas, la présente invention qui améliore la qualité de codage permet de fournir une qualité de signal équivalente à la qualité obtenue actuellement par des codeurs classiques MIC G711 mais sur un nombre de bits réduit.

Dans une autre application possible où le quantificateur est scalable en débit, il est possible d'étendre un quantificateur MIC à 9, 10 bits ou plus en conservant comme trame binaire en sortie du codeur, le bit de signe, le numéro de segment et en ajoutant des emplacements supplémentaires sur les segments avec la structure de trame correspondante. Quand on double le nombre d'emplacements pour chaque segment, un bit supplémentaire est nécessaire pour la transmission. Dans ce cas également, la présente invention améliore la qualité de codage quelque soit le nombre de bits d'amélioration optionnels décodés par le décodeur.

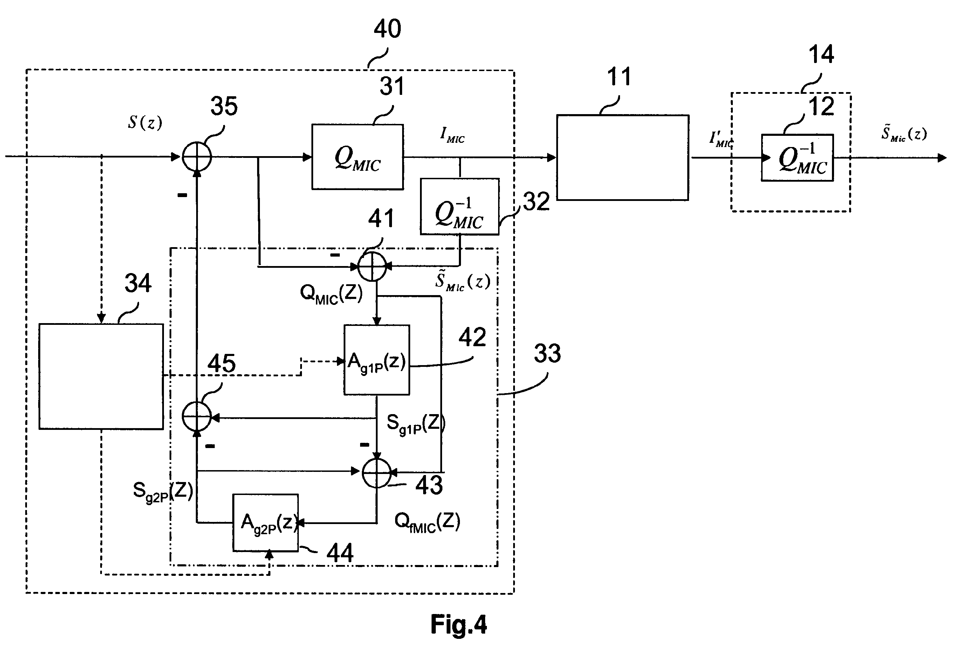

Un premier mode de réalisation de l'invention est maintenant décrit en référence à la **figure 4.**

Le codeur 40 décrit ici comporte les mêmes modules 31, 32, 34 et 35 que ceux référencés et décrits en référence à la figure 3. Le décodeur 14 est un décodeur classique tel que décrit en référence à la figure 1.

Le fonctionnement du module de mise en forme du bruit de quantification 33 est maintenant détaillé.

Dans un premier temps, le bruit de quantification $Q_{MIC}(Z)$ est obtenu en 41 en effectuant la différence entre l'entrée du quantificateur 31 et la sortie du quantificateur inverse 32.

Dans la suite nous utiliserons indifféremment la notation échantillons temporels n ou la transformée en z suivant que l'une ou l'autre est la plus pratique. Par exemple s(n) sera l'échantillon temporel de la transformée en z S(z) .

Un agencement de deux filtres $A_{g1P}(z)$ en 42 et $A_{g2P}(z)$ en 44 est prévu pour obtenir une fonction de pondération du bruit de quantification.

Cet agencement fonctionne de la manière suivante:

Une première somme partielle des échantillons est effectuée par le filtre $A_{g1P}(z)$ en 42 qui est de la forme:

$$A_{g1P}(z) = \sum_{k=1}^{K_1} a_{g1}(k) z^{-k} \qquad (1)$$

pour donner en sortie du filtre 42:

$$s_{g1P}(n) = \sum_{k=1}^{K_1} a_{g1}(k) q_{MIC}(n-k) \qquad (2)$$

où $q_{MIC}(n)$ est le bruit de quantification.

Un bruit de quantification filtré $q_{f\,MIC}(n)$ est obtenu en 43 en ajoutant le bruit de quantification $q_{MIC}(n)$ *au* signal $-S_{g1P}(n)$ et au signal $S_{g2P}(n)$ obtenu par le second filtre $A_{g2P}(z)$ en 44.
Ce second filtre $A_{g2P}(z)$ est donné par:

$$A_{g2P}(z) = \sum_{k=1}^{K_2} a_{g2}(k) z^{-k} \qquad (3)$$

$q_{f\,Mrc}(n)$ sera donc tel que:

$q_{f\,MIC}(n) = q_{MIC}(n) + S_{g2P}(n) - S_{g1P}(n)$ où $S_{g2P}(n)$ est donné par:

$$s_{g2P}(n) = \sum_{k=1}^{K_2} a_{g2}(k) q_{f\,MIC}(n-k) \qquad (4)$$

Les coefficients des filtres $A_{g1P}(z)$ et $A_{g2P}(z)$ sont calculés par des méthodes de prédiction linéaire par le module d'adaptation 34. Ces calculs seront détaillés ultérieurement en référence aux figures 6, 7 et 8.
La différence effectuée en 45 des signaux $S_{g1P}(n)$-$S_{g2P}(n)$ constituant un signal intermédiaire de contre-réaction est ensuite retranchée en 35 du signal d'entrée pour donner le signal d'entrée du quantificateur 31.
Le signal est ensuite quantifié et le bruit de quantification est obtenu à l'instant n par différence entre l'entrée du quantificateur et la sortie du quantificateur inverse.
L'expression du signal restitué en fonction du signal à coder et du bruit de quantification sera donnée par:

$$\tilde{S}_{MIC}(z) = S(z) + \frac{1 - A_{g1P}(z)}{1 - A_{g2P}(z)} Q_{MIC}(z) \qquad (5)$$

Comme le bruit de quantification est à peu près blanc, le spectre du bruit de codage qui sera perçu sera mis en forme par le filtre $\dfrac{1 - A_{g1P}(z)}{1 - A_{g2P}(z)}$ (ou $\dfrac{A_{g1}(z)}{A_{g2}(z)}$) caractéristique d'un filtre AutoRegressif à Moyenne Ajusté (ARMA).

Comme décrit par la suite le numérateur et le dénominateur sont souvent calculés à partir d'un filtre $A_g(z) = 1 - \sum_{k=1}^{K} a_g(k) z^{-k}$ en affectant des coefficients $g_1$ et $g_2$ de la façon suivante:

$$\frac{A_{g1}(z)}{A_{g2}(z)} = \frac{1 - \sum_{k=1}^{K-1} a_g(k) g_1^k z^{-k}}{1 - \sum_{k=1}^{K-1} a_g(k) g_2^k z^{-k}}$$

Ce type de fonction de pondération comportant une valeur au numérateur et une valeur au dénominateur a l'avantage par la valeur au dénominateur de prendre en compte les pics de signal et par la valeur au numérateur d'atténuer ces pics apportant ainsi une mise en forme optimale du bruit de quantification. Les valeurs de $g_1$ et $g_2$ sont telles que:

$$1 > g_2 > g_1 > 0$$

On peut noter que le schéma de la Figure 4 peut être généralisé pour des filtres ARMA en cascade afin de modéliser encore mieux le bruit pour des signaux d'entrée à très forte dynamique.

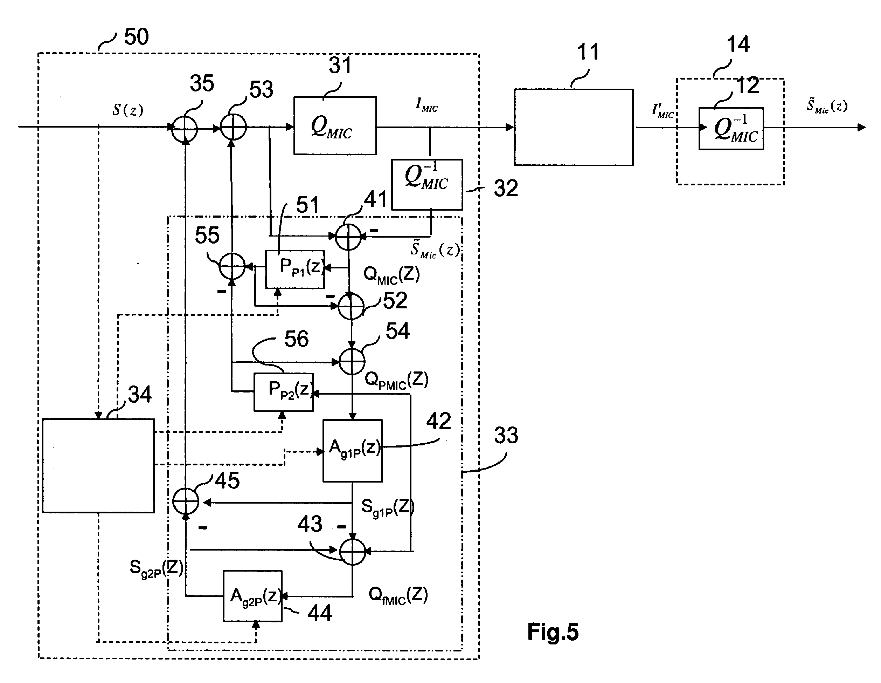

Un second mode de réalisation est maintenant décrit en référence à la **figure 5.** Le codeur 50 comporte les mêmes modules 31, 32, 34 que ceux décrits en référence aux figures 3 et 4. De même, le décodeur 14 est identique à celui décrit en référence aux figures 3 et 4.

Le module de mise en forme du bruit 33 est à présent détaillé.

Dans ce module, on retrouve le même agencement 41, 43, 45 et les filtres 42, 44 décrit en référence à la figure 4. D'autres filtres $P_{p1}(z)$ et $Pp_2(z)$ référencés 51 et 56 sont prévus.

En effet, dans le cas des signaux voisés et celui des signaux audionumériques de haute fidélité, une légère mise en forme à partir de la structure fine du signal révélant les périodicités du signal, réduit le bruit de quantification perçu entre les harmoniques du signal. L'amélioration est particulièrement significative dans le cas des signaux à fréquence fondamentale ou pitch relativement élevée par exemple supérieure à 200 Hz.

Le filtre 51 de mise en forme fonction de la structure fine du spectre est donné par:

$$P_1(z) = 1 - P_{P1}(z) \qquad (6)$$

Où $P_{P1}(z)$ est un filtre partiel donné par:

$$P_{P1}(z) = \sum_{k=-M_P}^{M_P} p_{1M_P}(k) Z^{-(Pitch+k)} \qquad (7)$$

où *Pitch* est le nombre d'échantillons d'une période du signal, $2M_P + 1$ est le nombre de coefficients du filtre partiel et $p_{1Mp}(k)k=-M_{P,....,}M_P$ sont les coefficients du filtre.

Le filtre 56 de mise en forme fonction au dénominateur est donné par:

$$P_2(z) = 1 - P_{P2}(z)$$

Où $P_{P2}(z)$ est un filtre partiel donné par:

$$P_{P2}(z) = \sum_{k=-M_P}^{M_P} p_{2M_P}(k) Z^{-(Pitch+k)}$$

L'agencement 52, 54, 55 et 53 des filtres 51 et 56 avec les filtres 42 et 44 est tel que le signal décodé $\tilde{S}_{MIC}(z)$ est donné en fonction du signal à coder et des filtres de mise en forme par:

$$\tilde{S}_{MIC}(z) = S(z) + \frac{1 - P_{P1}(z)}{1 - P_{P2}(z)} \frac{1 - A_{g1P}(z)}{1 - A_{g2P}(z)} Q_{MIC}(z) \qquad (8)$$

Le filtre $1 - P_{P1}(z)$ possède $2M_P$ zéros à l'intérieur du cercle unité, complexes conjugués de sorte que, quand la variable z parcourt le cercle unité, la réponse en fréquence de $1 - P_{P1}(z)$ va présenter $M_P$ maxima caractéristiques de la structure fine du spectre et correspondant à la périodicité du signal.

Les prédicteurs partiels $P_{P1}(z)$ et $P_{P2}(z)$ sont calculés à partir du signal d'entrée par des techniques de prédiction linéaire.

La **figure 2b** représente le spectre du même bloc de signal voisé qu'à la figure 2 mais contrairement à la figure 2 le bruit de quantification a été mis en forme en appliquant la variante de l'invention selon la figure 5. On peut observer que le bruit suit à la fois les formants et les harmoniques ; il se situe toujours sous le niveau du signal, ce qui implique que le bruit est ainsi rendu inaudible.

En référence à la **figure 6,** un premier mode de calcul des filtres de mise en forme par prédiction linéaire tel que les filtres référencés en 42 et 44 aux figures 4 et 5 va maintenant être décrit.

Ce premier exemple de mise en oeuvre est décrit sous forme d'algorithme à mettre en oeuvre par le module d'adaptation 34 décrit en référence aux figures 3, 4 et 5.

En E60, le module 34 reçoit en entrée un bloc de signal qui correspond soit au bloc courant si la quantification MIC est effectuée par bloc de signal, soit le signal du bloc précédent si la quantification MIC est effectuée échantillon par échantillon.

Le bloc de signal est ensuite pondéré par une fenêtre de Hanning en E61. D'autres fenêtres sont possibles telles que par exemple la fenêtre de Kaiser.

Les K +1 coefficients de corrélation sont ensuite calculés en E62 par:

$$Cor(k) = \sum_{n=0}^{N-1} s(n)s(n-k) \ k = 0,...,K \qquad (9)$$

Les coefficients du filtre AR (pour AutoRegressif) qui modélise l'enveloppe du signal sont donnés en E63 par l'algorithme de Levinson-Durbin:

On obtient donc un filtre $A_g(z)$ en E64, le filtre de fonction de transfert $\dfrac{1}{A_g(z)} = \dfrac{1}{1 - A_{gP}(z)}$ modélisant l'enveloppe du signal d'entrée.

Lorsque l'on met en oeuvre ce calcul pour les deux filtres $A_{g1}$ et $A_{g2}$, 42 et 44 du codeur selon l'invention, on obtient ainsi en E65 un filtre de mise en forme donné par:

$$\frac{A_{g1}(z)}{A_{g2}(z)} = \frac{1 - \sum_{k=1}^{K} a_g(k) g_1^k z^{-k}}{1 - \sum_{k=1}^{K} a_g(k) g_2^k z^{-k}} \qquad (10)$$

Un second mode de calcul des filtres est maintenant décrit en référence à la **figure 7.**

En E70, on prend en entrée un bloc de signal qui correspond soit au bloc courant si la quantification MIC est effectuée par bloc de signal, soit le signal du bloc précédent si la quantification MIC est effectuée échantillon par échantillon.

Le bloc de signal est ensuite pondéré en E71 par une fenêtre de pondération, puis une courbe de masquage est calculée en E72. Cette courbe représente le niveau maximum de bruit acceptable d'un point de vue inaudibilité. Un exemple de calcul efficace est donné pour le codage audio dans la référence Y. Mahieux, J. P. Petit, "High quality audio transform coding at 64 kbit/s", IEEE Trans. on Com., Vol. 42-11, November 1994.

Les coefficients de la courbe de masquage représentent une densité spectrale de puissance. Cette densité de puissance est approximée par un filtre AutoRégressif $\dfrac{1}{A_g(z)}$'. Pour cela une transformation de Fourier inverse de la courbe de masquage M(z) est d'abord effectuée en E73 pour obtenir les coefficients de corrélation représentatifs.

Les coefficients du filtre AR qui modélise la courbe de masquage sont donnés par l'algorithme de Levinson-Durbin en E74 pour donner le filtre AutoRégressif de mise en forme en E75:

$$\frac{1}{A_g(z)} = \frac{1}{1 - \sum_{k=1}^{K} a_g(k)z^{-k}} \qquad (11)$$

Dans ce cas le filtre ARMA de masquage est réduit à un filtre autorégressif (pas de numérateur) qui modélise la courbe de masquage. Cette façon de procéder peut être intéressante car le codeur MIC peut aussi coder de la musique (ex: musique de fond d'attente) en bande réduite [0-4 kHz] et dans ce cas il est plus précis d'utiliser les courbes de masquage.

Ce mode de calcul peut ainsi être appliqué au filtre $A_{g2}$ de la figure 4, le filtre $A_{g1}$ étant mis à 0.

Un troisième mode de calcul de filtre de mise en oeuvre est à présent décrit en référence à la **figure 8.** En E80, on prend en entrée un bloc de signal qui correspond soit au bloc courant si la quantification MIC est effectuée par bloc de signal, soit le signal du bloc précédent si la quantification MIC est effectuée échantillon par échantillon.

Le bloc de signal est ensuite pondéré en E81 par une fenêtre de pondération puis la courbe de masquage est calculée en E82 comme dans le cas précédent décrit en figure 7. Les coefficients de la courbe de masquage représentent une densité spectrale de puissance qui est approximée dans le cas présent par un filtre Moyenne Ajustée $A_g(z)$. Pour cela, on prend en E83 l'inverse de la courbe de masquage en prenant soin de limiter les amplitudes provenant des faibles valeurs de $M(z)$ et on effectue en E84 une transformation de Fourier inverse de $\dfrac{1}{M(z)+\varepsilon}$ qui donne les coefficients de corrélation représentatifs.

Les coefficients du filtre AR qui modélise l'inverse de la courbe de masquage sont donnés en E85 par l'algorithme de Levinson-Durbin:

$$A_g(z) = 1 - \sum_{k=1}^{K} a_g(k)z^{-k} \qquad (12)$$

Le filtre à Moyenne Ajustée 1-$A_g(z)$ ainsi défini ne comporte pas de coefficients au dénominateur et sera le filtre MA qui modélise la courbe de masquage.

Ce mode de calcul peut ainsi être appliqué au filtre $A_{g1}$ de la figure 4, le filtre $A_{g2}$ étant mis à 0.

Un quatrième mode de calcul des filtres de mise en forme est possible. Il présente l'avantage de ne pas nécessiter de stocker le signal par blocs et conduit donc à un système de codage à retard minimal. Dans ce mode, on va adapter les coefficients du filtre ARMA de mise en forme à chaque échantillon par un algorithme du gradient. On va d'abord calculer les coefficients du filtre ARMA qui modélisent le signal d'entrée $s(n)$ comme décrit par exemple à la figure 6.

Le signal d'erreur sera donné en fonction du signal $s(n)$ par:

$$e(n) = s(n) - \sum_{k=1}^{K_D} a(k)s(n-k) + \sum_{k=1}^{K_N} b(k)e(n-k) \qquad (13)$$

En prenant le gradient de $e^2(n)$ on déduit l'algorithme d'adaptation des coefficients du filtre ARMA:

$$a(k,n) = \alpha_D a(k,n-1) + \beta_D e(n)s(n-k) \quad k = 1,...,K_D \qquad (14)$$

$$b(k,n) = \alpha_N b(k,n-1) + \beta_N e(n)e(n-k) \quad k = 1,...,K_N \qquad (15)$$

A partir des coefficients qui modélisent le signal $s(n)$, on va calculer le filtre de mise en forme en affectant une

pondération $g_1$ et $g_2$ au filtre ARMA modélisant $s(n)$ pour donner:

$$\frac{A_{g1}(z)}{A_{g2}(z)} = \frac{1 + \sum_{k=1}^{K_N} b(k) g_1^k z^{-k}}{1 - \sum_{k=1}^{K_D - 1} a(k) g_2^k z^{-k}} \qquad (16)$$

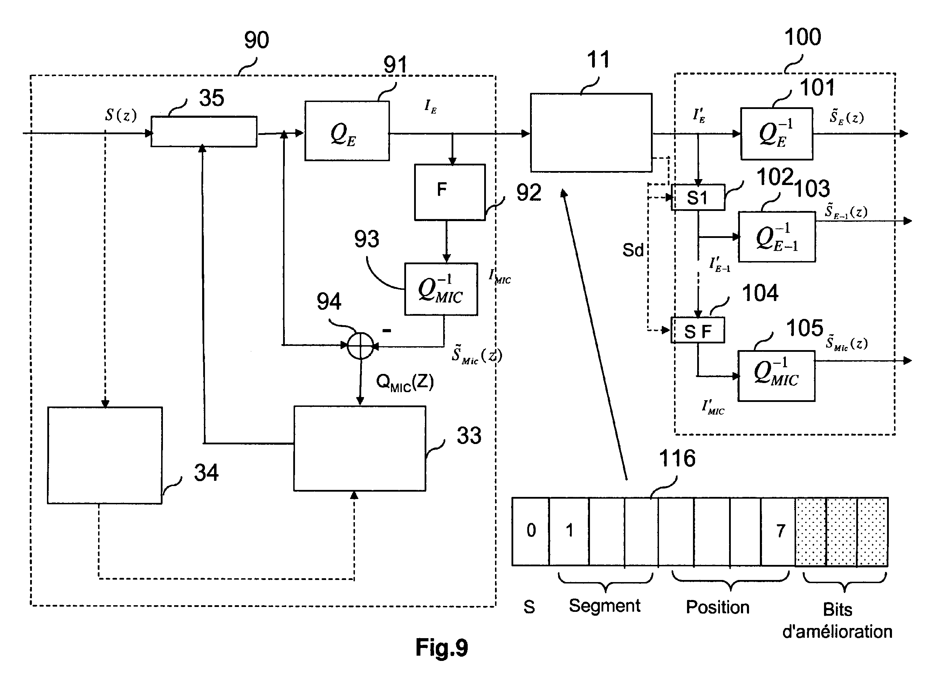

En référence à la **figure 9,** un autre mode de réalisation d'un codeur selon l'invention est maintenant décrit.

Dans ce mode de réalisation, le quantificateur MIC à 8 bit est étendu à un quantificateur MIC à 9, 10 bits ou plus en conservant comme trame binaire en sortie du codeur, le bit de signe, le numéro de segment et en ajoutant des emplacements supplémentaires sur les segments comme le montre la Figure 9 avec la structure de trame 116 correspondante. Quand on double le nombre d'emplacements pour chaque segment, un bit supplémentaire est nécessaire pour la transmission.

La figure 9 donne un exemple de mise en oeuvre de quantification MIC imbriquée où le module de mise en forme du bruit 33 tel que décrit dans les modes de réalisation des figures 3, 4 ou 5 est conservé ainsi que le module d'adaptation 34.

Le quantificateur MIC imbriqué $Q_E$ référencé 91 se trouve dans une boucle de contre réaction de mise en forme du bruit de quantification. Il génère un code $I_E$ à la sortie du quantificateur imbriqué $Q_E$ de plus fort débit de $E$ bits. La mise en forme du bruit de quantification est effectuée à partir de la sortie du quantificateur MIC inverse 93 de 8 bits coeur qui correspond par exemple au quantificateur MIC G.711. Celui-ci doit donc être alimenté par un indice $I_{MIC}$ obtenu à partir de $I_E$ en éliminant les F bits d'amélioration de poids faible par le module 92, c'est-à-dire que F est tel que:

$$E = 8 + F$$

Ce module de quantification inverse de 8 bits coeur peut être appelé module de quantification inverse coeur qui a le débit minimum coeur de 8 bits.

La fonction de pondération du bruit de quantification appliqué par le module 33 selon l'invention est appliquée au bruit de quantification issu de ce module de quantification inverse coeur.

Au décodeur la trame d'indices de quantification l'$_E$ reçu est décodé par le quantificateur inverse $Q_E$ référencé 101 pour donner le signal décodé de plus haut débit $\tilde{S}_E(n)$.

Lorsqu'un fonctionnement à un débit de E-1 bit est signalé (cas Sd au décodeur, c'est-à-dire signalisation du débit), le bit d'amélioration de poids faible de l'$_E$ est masqué ce qui donne un indice l'$_{E-1}$ à E-1 bits. Cette opération est signalée en 102 par l'opérateur S1.

La sortie à E-1 bits $\tilde{S}_{E-1}(n)$ est obtenue à la sortie du quantificateur inverse $Q_{E-1}$ 103 alimenté par l'indice l'$_{E-1}$ et ainsi de suite jusqu'à $SF$ où $E$-8 bits d'amélioration sont supprimés par l'opération SF en 104 pour donner l'indice l'$_{MIC}$ qui produit la sortie $\tilde{S}_{MIC}(n)$ du quantificateur MIC 8 bits inverse. Si à un endroit quelconque de la transmission seul les 8 bits MIC sont conservés, l'indice résultant pourra être décodé par un décodeur MIC standard.

Ainsi, on peut montrer au moyen de la transformée en z que la mise en forme du bruit de quantification est effective. En effet l'expression du signal $\tilde{S}_{MIC}(z)$ est donnée par:

$$\tilde{S}_{MIC}(z) = S(z) + Mask(z) Q_{MIC}(z) \qquad (17)$$

où $Mask(z)$ est donné par:

$$Mask(z) = \frac{1 - A_{g1P}(z)}{1 - A_{g2P}(z)} \qquad (18)$$

dans le cas où on opte pour la structure de mise en forme de la Figure 4.

Le signal haut débit $\tilde{S}_E(z)$ sera donné par:

$$\tilde{S}_E(z) = S(z) + Mask(z)Q_E(z) - [1 - Mask(z)]Q_F(z) \qquad (19)$$

où $Q_F(z)$ est égal à la différence des signaux de sortie des quantificateurs $Q_{MIC}$ et $Q_E$ tel que:

$$Q_F(z) = Q_{MIC}(z) - Q_E(z) \qquad (20)$$

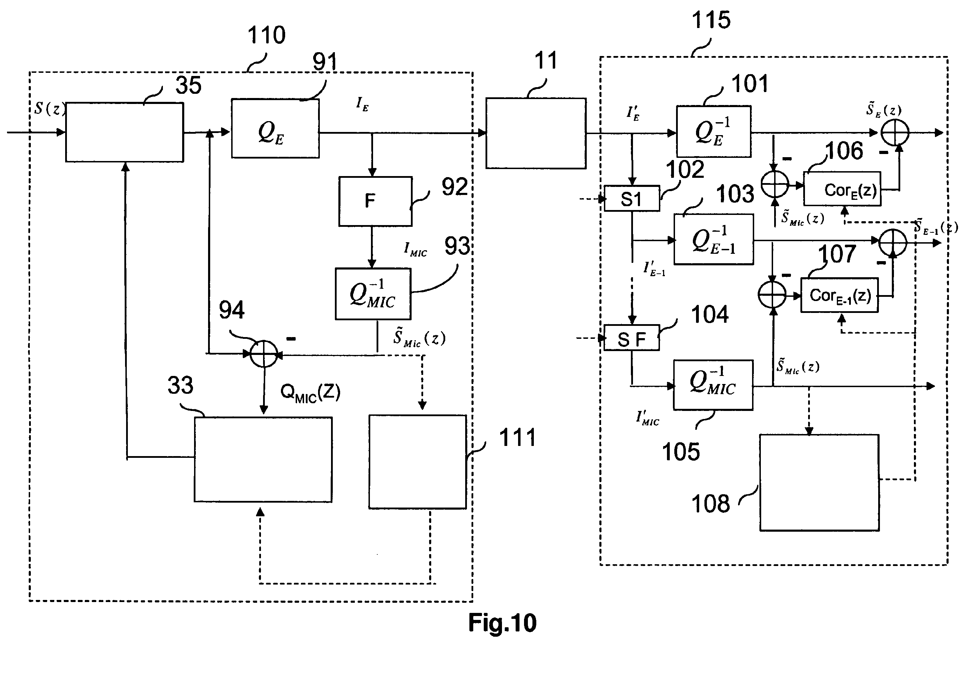

Pour améliorer le mode de réalisation décrit en référence à la figure 9, on va à présent décrire en référence à la **figure 10** une variante de réalisation.

Dans la structure de la figure 9 on peut voir en examinant l'équation (19) que le signal $\tilde{S}_E(z)$ contient un terme parasite $Par_E(z)$ par rapport au quantificateur non imbriqué et optimal:

$$Par_E(z) = [1 - Mask(z)]Q_F(z) \qquad (21)$$

Remarquons que pour le bas débit du MIC on se trouve dans la configuration optimale et il n'y a pas de terme parasite dans l'équation (17).

Pour être capable de reconstituer le terme parasite au décodeur, il est nécessaire d'effectuer l'adaptation des filtres par le module 111 à partir de l'un des signaux reconstitués. Comme $\tilde{S}_{MIC}(z)$ est toujours présent, il est naturel de choisir ce signal pour l'adaptation des filtres de mise en forme.

La seule différence entre le codeur de la figure 9 et celui de la figure 10, est que pour le codeur 110 l'adaptation des filtres de mise en forme en 111 est effectuée à partir du signal $\tilde{S}_{MIC}(z)$, ce signal étant présent au décodeur dans tous les cas.

Au décodeur l'adaptation des filtres de mise en forme est également effectuée par le module 108 à partir du signal $\tilde{S}_{MIC}(z)$, ce signal étant disponible dans toutes les configurations de débit. En l'absence d'erreurs de transmission l'adaptation des filtres sera identique au codeur et au décodeur.

La partie imbriquée du décodeur est obtenue à partir du décodeur décrit à la figure 9 en modifiant les sorties des quantificateurs inverses par un terme correctif issu de la sortie du filtre $Cor_k(z)$ alimenté par la différence entre $\tilde{S}_{MIC}(z)$ et $\tilde{S}_{Qk}(z)$, k étant le nombre de bits du quantificateur concerné et $\tilde{S}_{Qk}(z)$ la sortie du quantificateur inverse k. Les termes correctifs sont donc introduits dans le décodeur en 106 pour $Cor_E(z)$, en 107 pour $Cor_{E-1}(z)$ etc...

Le filtre de correction est donné par:

$$Cor_k(z) = [1 - Mask(z)][Q_{MIC}(z) - Q_k(z)] \qquad (22)$$

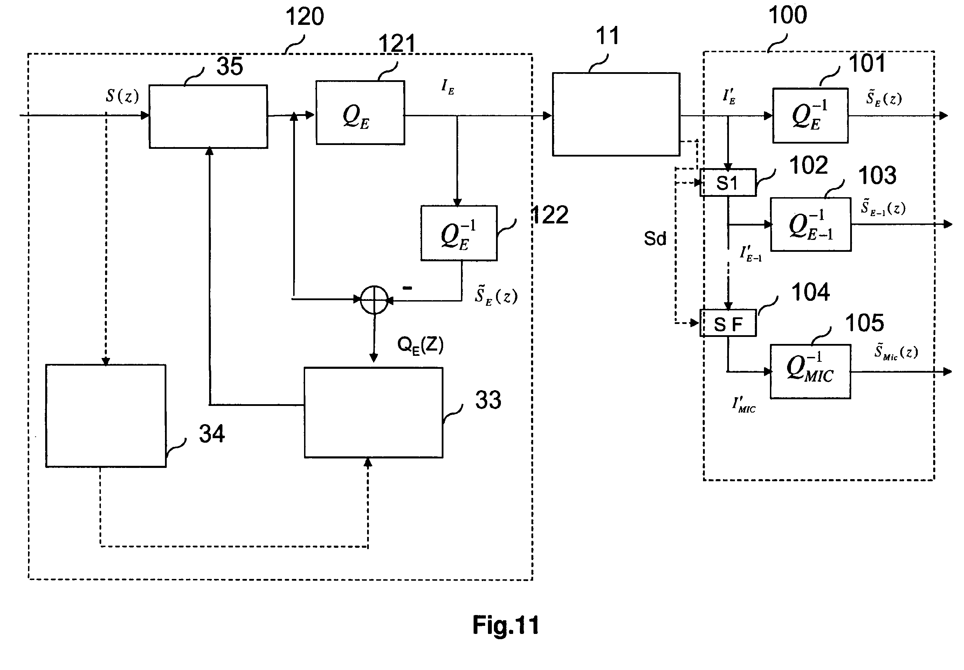

Un autre mode de réalisation de l'invention pour un codeur à structure imbriquée est maintenant décrit en référence à la **figure 11.**

Dans ce cas présent, la mise en forme du bruit est effectuée pour la quantification haut débit. Sur cette figure le quantificateur $Q_E$ imbriqué 121 du codeur 120 se trouve dans une boucle de contre réaction de mise en forme du bruit de quantification. Il génère un code $I_E$ à la sortie du quantificateur imbriqué $Q_E$ de plus fort débit de $E$ bits. La mise en forme du bruit de quantification est effectuée à partir de la sortie du quantificateur $Q_E^{-1}$ inverse 122 de 9, 10 bits ou plus, alimenté par l'indice $I_E$.

Au décodeur l'indice $I'_E$ reçu est décodé par le quantificateur inverse (table) $Q_E$ 101 pour donner le signal décodé de plus haut débit $\tilde{S}_E(n)$.

Lorsqu'un fonctionnement à un débit de E-1 bit est signalé (cas Sd au décodeur, c'est-à-dire signalisation du débit), le bit de poids faible de $I'_E$ est masqué par l'opération S1 en 102 ce qui donne un indice $I'_{E-1}$ à E-1 bits.

La sortie à E-1 bits $\tilde{S}_{E-1}(n)$ est obtenue à la sortie du quantificateur inverse $Q_{E-1}$ 103 alimenté par l'indice $I'_{E-1}$ et ainsi de suite jusqu'à $SF$ où $E$-8 bits sont supprimés pour donner l'indice $I'_{MIC}$ qui produit la sortie $\tilde{S}_{MIC}(n)$ du quantificateur MIC 8 bits inverse.

Au moyen de la transformée en z, on peut montrer que le signal $\tilde{S}_E(z)$ est donné par:

$$\tilde{S}_E(z) = S(z) + [1 - B_P(z)]Q_E(z) \qquad (23)$$

Le signal en sortie du quantificateur MIC sera donné par:

$$\tilde{S}_{MIC}(z) = S(z) + [1 - B_P(z)]Q_E(z) + Q_F(z) \qquad (24)$$

où $Q_F(z)$ est la différence, à l'émetteur, entre la sortie du quantificateur inverse $Q_E^{-1}$ et du quantificateur MIC inverse $Q_{MIC}^{-1}$.

Dans le cas présent, en sortie du quantificateur MIC on ne connaît en général pas le terme $Q_F(z)$ puisque les bits de poids faibles de $I_E$ ont été éliminés et il n'est donc pas possible d'éliminer ce terme. Le bruit généré en configuration de quantification MIC inverse sera donc partiellement mis en forme par la somme d'un composant de bruit $Q_F(z)$ (à peu près blanc) et d'un composant de bruit mis en forme $[1-B_p(z)]Q_E(z)$.

Bien évidemment la mise en forme du bruit de quantification peut être également effectuée pour un débit intermédiaire entre le débit de coeur et le plus haut débit.

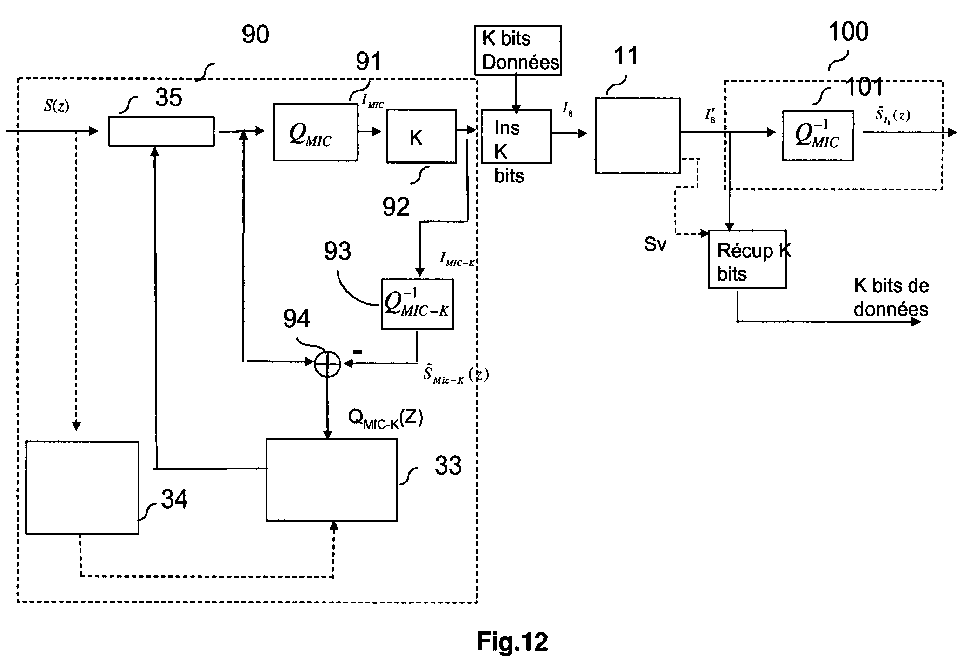

La **figure 12** donne un exemple de mise en oeuvre de quantification MIC imbriquée avec vol de bits. Le module de mise en forme du bruit 33 tel que décrit dans les modes de réalisation des figures 3, 4 ou 5 est conservé ainsi que le module d'adaptation 34.

Le quantificateur MIC imbriqué $Q_{MIC}$ référencé 91 se trouve dans une boucle de contre réaction de mise en forme du bruit de quantification. Il génère un code $I_{MIC}$ à la sortie du quantificateur imbriqué $Q_{MIC}$ débit de 8 bits. En fait le code MIC G.711 est un code naturellement imbriqué. Il est possible de "voler" 1, 2 ou 3 bits de position sur le segment. On va donc utiliser ces bits pour transmettre de l'information auxiliaire, par exemple des bits d'amélioration de qualité par un codage de la bande supplémentaire de 4 à 6 kHz ou plus. Les K= 1, 2 ou 3 bits de poids faible de $I_{MIC}$ seront donc remplacés par des bits de données pour donner un indice $I_8$ . La mise en forme du bruit de quantification est effectuée à partir de la sortie du quantificateur MIC inverse $Q_{MIC-K}$ 93 de 8-K bits alimenté par l'indice $I_{MIC-K}$ obtenu à partir de $I_{MIC}$ en masquant les K bits de poids faible.

Ce module de quantification inverse de 8-K bits peut être encore appelé module de quantification inverse coeur qui a le débit minimum coeur de 8-K bits.

La fonction de pondération du bruit de quantification appliqué par le module 33 selon l'invention est appliquée au bruit de quantification issu de ce module de quantification inverse coeur.

Dans une variante de réalisation, le vol de bits peut être effectué dans un module 92 en dehors du codeur. La mise en forme du bruit de quantification est effectuée alors pour la sortie du G711 $Q_{MIC}$.

Au décodeur, lorsque le décodeur se trouve être un décodeur MIC standard, la trame d'indices de quantification $I'_8$ reçu est décodée par le quantificateur inverse $Q_{MIC}^{-1}$ référencé 101 pour donner le signal décodé $\tilde{S}_{I8}(n)$ . L'indice $I'_8$ est décodé en aveugle par le décodeur MIC standard. Les bits de données en poids faible, s'il y en a, se traduisent par un bruit de codage supplémentaire (on perd 6 dB par bit utilisé pour les données) mais la qualité reste acceptable grâce à la mise en forme du bruit selon la présente invention et on garde la compatibilité "backward" avec les anciens systèmes.

De plus si l'on dispose d'un nouveau décodeur et que l'information de débit Sv a pu être transmise par le réseau, on pourra récupérer les bits de données par exemple pour utilisation d'une couche d'amélioration de qualité bande élargie.

Accessoirement, on pourra masquer les k bits de poids faible de l'indice $I'_8$ avant d'effectuer le décodage MIC, ce qui aura pour effet de réduire légèrement le bruit. On peut noter que les applications du vol de bit du MIC sont nombreuses et deviennent d'autant plus intéressantes que la mise en forme du bruit de quantification améliore la qualité de restitution du signal de 8 - K bits.

**Revendications**

**1.** Procédé de codage d'un signal audio d'entrée dans lequel ledit signal audio d'entrée est combiné à un signal intermédiaire de contre-réaction formant un signal d'entrée modifié et comportant une étape de quantification scalable en débit (91) dudit signal d'entrée modifié, délivrant une trame binaire d'indices de quantification ($I_E$) d'un débit prédéterminé, comportant en outre, les étapes suivantes:

- quantification inverse (93) d'une partie des indices de quantification de la trame binaire correspondant aux indices d'un débit inférieur ($I_{MIC}$) au débit prédéterminé, pour déterminer un signal reconstruit ($\tilde{S}_{MIC}(z)$);
- détermination (94) d'un bruit de quantification ($Q_{MIC}(z)$) engendré au moins par la succession de l'étape de quantification et de quantification inverse;
- détermination (111) d'une fonction de filtrage du bruit de quantification à partir dudit signal reconstruit *($\tilde{S}_{MIC}(z)$)*;
- application (33) de ladite fonction de filtrage audit bruit de quantification pour obtenir ledit signal intermédiaire de contre-réaction.

**2.** Procédé selon la revendication 1, **caractérisé en ce que** l'étape de quantification scalable en débit fournit au minimum des indices de quantification de débit coeur correspondant à un codage coeur de type codage MIC interopérable avec la norme IUT-T G.711 loi A ou mu.

**3.** Procédé selon la revendication 1 ou 2, **caractérisé en ce que** ledit signal intermédiaire de contre-réaction est calculé à partir d'une prédiction (42) du bruit de quantification ($Q_{MIC}$) et d'une prédiction (44) du bruit de quantification filtré ($Q_{fMIC}$), le bruit de quantification filtré étant obtenu par addition (43) du signal intermédiaire et du bruit de quantification ($Q_{MIC}$).

**4.** Procédé selon l'une quelconque des revendications 1 à 3, **caractérisé en ce** la fonction de filtrage du bruit de quantification est calculée en outre à partir de caractéristiques de périodicité du signal d'entrée.

**5.** Procédé de codage selon la revendication 1, **caractérisé en ce que** l'étape de quantification scalable d'un débit prédéterminé est une quantification scalaire MIC interopérable avec la norme IUT-T G.711 loi A ou mu., l'étape de quantification inverse des indices de débit inférieur au débit prédéterminé s'applique sur 8-K bits de la trame binaire pour déterminer un signal reconstruit *($\tilde{S}_{MIC}(z)$)* et **en ce qu'**une étape d'insertion de K bits de données est en outre effectuée.

**6.** Procédé de décodage scalable d'un signal audio comportant:

- une première étape de quantification inverse (105) décodant des indices de quantification d'un premier débit dit débit coeur, pour former un signal reconstruit ($\tilde{S}_{MIC}(z)$);
- une seconde étape de quantification inverse (101) décodant des indices de quantification d'un second débit supérieur au débit coeur, mise en oeuvre en fonction du débit reçu au décodage, pour former un signal reconstruit ($\tilde{S}_E(z)$) de débit supérieur
comportant en outre
- une étape d'obtention d'un signal différence entre ledit signal *($\tilde{S}_{Mic}(z)$)* reconstruit de débit coeur et ledit signal ($\tilde{S}_E(z)$) reconstruit de débit supérieur;
- une étape de détermination (108) d'une fonction de filtrage de correction à partir du signal ($\tilde{S}_{MIC}(z)$) reconstruit de débit coeur;
- une étape d'application (106) de ladite fonction de filtrage de correction audit signal de différence pour obtenir un terme correctif;
- une étape de synthèse d'un signal corrigé reconstruit à débit supérieur en combinant ledit terme correctif et un des signaux reconstruit ($\tilde{S}_{MIC}(z)$ $\tilde{S}_E(z)$).

**7.** Procédé selon la revendication 6, **caractérisé en ce que** ledit terme correctif est appliqué audit signal reconstruit de débit coeur.

**8.** Procédé selon la revendication 6, **caractérisé en ce que** ledit terme correctif est appliqué audit signal reconstruit de débit supérieur.

**9.** Procédé de décodage selon la revendication 6, **caractérisé en ce qu'**il comporte une étape de réception d'information d'insertion de bits au codage et **en ce que** en cas d'information d'insertion de K bits, une étape de masquage des K bits insérés est effectuée avant la première étape de quantification inverse de débit coeur.

**10.** Codeur de signal audio d'entrée (S(z)) comportant un module de combinaison combinant le signal audio d'entrée à un signal intermédiaire de contre-réaction formant un signal d'entrée modifié et un module de quantification scalable en débit (91) dudit signal d'entrée modifié, délivrant une trame binaire d'indices de quantification d'un débit prédéterminé, comportant en outre:

- un module de quantification inverse (93) d'une partie des indices de quantification de la trame binaire correspondant aux indices d'un débit inférieur au débit prédéterminé, pour déterminer un signal $(\tilde{S}_{MIC}(z))$ reconstruit;
- un module de détermination (94) d'un bruit de quantification $(Q_{MIC}(z))$ issu au moins des modules de quantification et de quantification inverse en cascade;
- un module de détermination (111) d'une fonction de filtrage du bruit de quantification à partir dudit signal reconstruit $(\tilde{S}_{MIC}(z))$; et
- un module de filtrage apte à appliquer (33) ladite fonction de filtrage audit bruit de quantification pour obtenir ledit signal intermédiaire de contre-réaction.

**11.** Décodeur d'un signal audio comportant:

- une premier module de quantification inverse (105) décodant des indices de quantification d'un premier débit dit débit coeur, pour former un signal $\tilde{S}_{MIC}(z)$ reconstruit;
- un second module de quantification inverse décodant des indices de quantification d'un second débit supérieur au débit coeur, mise en oeuvre en fonction du débit reçu au décodage, pour former un signal reconstruit de débit supérieur, comportant en outre
- un module d'obtention d'un signal différence $(Q_F(z))$ entre ledit signal reconstruit $(\tilde{S}_{MIC}(z))$ de débit coeur et ledit signal reconstruit $(\tilde{S}_E(z))$ de débit supérieur;
- un module de détermination (108) d'une fonction de filtrage de correction à partir du signal $(\tilde{S}_{MIC}(z))$ reconstruit de débit coeur;
- un module de filtrage apte à appliquer (106) ladite fonction de filtrage de correction audit signal de différence pour obtenir un terme correctif;
- un module de synthèse d'un signal corrigé reconstruit à débit supérieur apte à combiner ledit terme correctif et un des signaux reconstruit $(\tilde{S}_{MIC}(z) \ \tilde{S}_E(z))$.

**12.** Programme d'ordinateur destiné à être stocké dans une mémoire d'un codeur ou d'un décodeur et/ou sur un support mémoire apte à coopérer avec un lecteur du codeur ou du décodeur, comportant des instructions de code adaptées pour la mise en oeuvre des étapes du procédé de codage selon l'une des revendications 1 à 5,et/ou du procédé de décodage selon l'une des revendications 6 à 8, lorsque ledit programme est exécuté par un processeur du codeur ou du décodeur.

**Claims**

**1.** Method of coding an input audio signal in which said input audio signal is combined with an intermediate feedback signal forming a modified input signal and including a bit rate scalable step (91) of quantizing said modified input signal, delivering a quantizing index binary frame $(I_E)$ of predetermined bit rate, the coding method further including the following steps:

- inverse quantization (93) of some of the quantizing indices of the binary frame corresponding to the indices $(I_{PCM})$ of a bit rate lower than the predetermined bit rate, to determine a reconstructed signal $(\tilde{S}_{PCM}(z))$;
- determining (94) quantizing noise $(Q_{PCM}(z))$ generated at least by the succession of the quantizing step and the inverse quantizing step;
- determining (111) a quantizing noise filter function from said reconstructed signal $(\tilde{S}_{PCM}(z))$;
- applying (33) said filter function to said quantizing noise to obtain said intermediate feedback signal.

**2.** Method according to Claim 1, **characterized in that** the bit rate scalable quantizing step provides at least core bit rate quantizing indices corresponding to PCM coding type core coding interoperable with the A-law or the $\mu$-law of the ITU-T standard G.711.

**3.** Method according to Claim 1 or 2, **characterized in that** said intermediate feedback signal is calculated from a prediction (42) of the quantizing noise $(Q_{PCM})$ and a prediction (44) of the filtered quantizing noise $(Q_{fPCM})$, the filtered quantizing noise being obtained by adding (43) the intermediate signal and the quantizing noise $(Q_{PCM})$.

4. Method according to any of Claims 1 to 3, **characterized in that** the quantizing filter function is furthermore calculated from periodicity characteristics of the input signal.

5. Coding method according to Claim 1, **characterized in that** the scalable quantizing step of predetermined bit rate is a PCM scalar quantizing step interoperable with the A-law or the μ-law of the ITU-T standard G.711, the inverse quantizing step of the indices of bit rate lower than the predetermined bit rate applies to 8-K bits of the binary frame to determine a reconstructed signal $(\tilde{S}_{PCM}(z))$, and there is also effected a step of inserting K data bits.

6. Method for scalable decoding of an audio signal, including:

   - a first module of inverse quantization decoding quantizing indices of a first or core bit rate to form a reconstructed signal;
   - a second module of inverse quantization decoding quantizing indices of a second bit rate higher than the core bit rate, executed as a function of the bit rate received on decoding, to form a reconstructed signal of higher bit rate, the decoding method further including:
   - a module of obtaining a difference signal between said core bit rate reconstructed signal and said higher bit rate reconstructed signal;
   - a module of determining a correction filter function from the reconstructed core bit rate signal;
   - a filter module capable of applying said correction filter function to said difference signal to obtain a corrective term;
   - a module of synthesizing a corrected reconstructed signal at higher bit rate capable of combining said corrective term and one of the reconstructed signals.

7. Method according to Claim 6, **characterized in that** said corrective term is applied to said core bit rate reconstructed signal.

8. Method according to Claim 6, **characterized in that** said corrective term is applied to said higher bit rate reconstructed signal.

9. Decoding method according to Claim 6, **characterized in that** it includes a step of receiving information regarding insertion of bits on coding and, in the case of insertion information on K bits, a step of masking the K bits inserted is effected before the first step of core bit rate inverse quantization.

10. Input audio signal (S(z)) coder including a combination module combining the input audio signal with an intermediate feedback signal to form a modified input signal and a bit rate scalable quantizing module (91) for quantizing said modified input signal to deliver a binary frame of quantizing indices of predetermined bit rate, the coder further including:

    - a module for inverse quantization (93) of some of the quantizing indices of the binary frame corresponding to the indices of a bit rate lower than the predetermined bit rate, to determine a reconstructed signal $(\tilde{S}_{PCM}(z))$;
    - a module for determining (94) a quantizing noise $(Q_{PCM}(z))$ generated at least by the succession of the quantizing step and the inverse quantizing step;
    - a module for determining (111) a quantizing noise filter function from said reconstructed signal $(S_{PCM}(z))$;
    - a module for applying (33) said filter function to said quantizing noise to obtain said intermediate feedback signal.

11. Audio signal decoder including:

    - a first module (105) for inverse quantization decoding quantizing indices at a first or core bit rate to form a reconstructed signal $(\tilde{S}_{PCM}(z))$;
    - a second module for inverse quantization decoding quantizing indices at a second bit rate higher than the core bit rate, executed as a function of the bit rate received on decoding, to form a reconstructed signal of higher bit rate,
    the decoder further including:
    - a module for obtaining a difference signal $(Q_F(z))$ between said core bit rate reconstructed signal $(\tilde{\tilde{S}}_{PCM}(z))$ and said higher bit rate reconstructed signal $\tilde{S}_E(z))$;
    - a module (108) for determining a correction filter function from the reconstructed core bit rate signal $(\tilde{S}_{PCM}(z))$;
    - a module (106) for applying said correction filter function to said difference signal to obtain a corrective term;
    - a module for synthesizing a corrected reconstructed signal at higher bit rate by combining said corrective term and one of the reconstructed signals $(\tilde{\mathbf{S}}_{PCM}(z), \tilde{\mathbf{S}}_{E}(z))$.

12. Computer program intended to be stored in a memory of a coder or a decoder and/or on a memory medium adapted to cooperate with a reader of the coder or the decoder, including code instructions suitable for executing the steps of the coding method according to any of Claims 1 to 5 and/or the decoding method according to any of Claims 6 to 8 when said program is executed by a processor of the coder or the decoder.

**Patentansprüche**

1. Verfahren zur Codierung eines Eingangs-Audiosignals, bei dem das Eingangs-Audiosignal mit einem Gegenkopplungs-Zwischensignal kombiniert wird, wodurch ein verändertes Eingangssignal geformt wird, und das einen Schritt der Durchsatz-skalierbaren Quantisierung (91) des veränderten Eingangssignals aufweist, der einen Binärrahmen von Quantisierungsindices ($I_E$) eines vorbestimmten Durchsatzes liefert, das außerdem die folgenden Schritte aufweist:

   - inverse Quantisierung (93) eines Teils der Quantisierungsindices des Binärrahmens entsprechend den Indices eines geringeren Durchsatzes ($I_{MIC}$) als der vorbestimmte Durchsatz, um ein rekonstruiertes Signal ($\tilde{\mathbf{S}}_{Mic}(z)$) zu bestimmen;
   - Bestimmung (94) eines Quantisierungsrauschens ($Q_{MIC}(z)$), das mindestens durch die Folge des Schritts der Quantisierung und der inversen Quantisierung erzeugt wird;
   - Bestimmung (111) einer Filterfunktion des Quantisierungsrauschens ausgehend vom rekonstruierten Signal ($\tilde{\mathbf{S}}_{Mic}(z)$);
   - Anwendung (33) der Filterfunktion an das Quantisierungsrauschen, um das Gegenkopplungs-Zwischensignal zu erhalten.

2. Verfahren nach Anspruch 1, **dadurch gekennzeichnet, dass** der Schritt der Durchsatz-skalierbaren Quantisierung mindestens Kerndurchsatz-Quantisierungsindices liefert, die einer Kerncodierung des Typs MIC-Codierung entsprechen, die mit der Norm IUT-T G.711 Gesetz A oder mu interoperabel ist.

3. Verfahren nach Anspruch 1 oder 2, **dadurch gekennzeichnet, dass** das Gegenkopplungs-Zwischensignal ausgehend von einer Vorhersage (42) des Quantisierungsrauschens ($Q_{MIC}$) und von einer Vorhersage (44) des gefilterten Quantisierungsrauschens ($Q_{fMIC}$) berechnet wird, wobei das gefilterte Quantisierungsrauschen durch Addition (43) des Zwischensignals und des Quantisierungsrauschens ($Q_{MIC}$) erhalten wird.

4. Verfahren nach einem der Ansprüche 1 bis 3, **dadurch gekennzeichnet, dass** die Filterfunktion des Quantisierungsrauschens außerdem ausgehend von Periodizitätsmerkmalen des Eingangssignals berechnet wird.

5. Codierverfahren nach Anspruch 1, **dadurch gekennzeichnet, dass** der Schritt der skalierbaren Quantisierung eines vorbestimmten Durchsatzes eine mit der Norm IUT-T G.711 Gesetz A oder mu interoperable skalare Quantisierung MIC ist, der Schritt der inversen Quantisierung der Indices eines Durchsatzes geringer als der vorbestimmte Durchsatz auf 8-K Bits des Binärrahmens angewendet wird, um ein rekonstruiertes Signal ($\tilde{\mathbf{S}}_{Mic}(z)$) zu bestimmen, und dass außerdem ein Schritt des Einfügens von K Datenbits ausgeführt wird.

6. Verfahren zur skalierbaren Decodierung eines Audiosignals, das aufweist:

   - einen ersten Schritt der inversen Quantisierung (105), der Quantisierungsindices eines ersten Durchsatzes, Kerndurchsatz genannt, decodiert, um ein rekonstruiertes Signal ($\tilde{\mathbf{S}}_{Mic}(z)$) zu formen;
   - einen zweiten Schritt der inversen Quantisierung (101), der Quantisierungsindices eines zweiten Durchsatzes höher als der Kerndurchsatz decodiert, der abhängig vom bei der Decodierung empfangenen Durchsatz angewendet wird, um ein rekonstruiertes Signal ($\tilde{\mathbf{S}}_{E}(z)$) höheren Durchsatzes zu formen,
   das weiter aufweist
   - einen Schritt des Erhalts eines Differenzsignals zwischen dem rekonstruierten Kerndurchsatz-Signal ($\tilde{\mathbf{S}}M_{ic}(z)$) und dem rekonstruierten Signal ($\tilde{\mathbf{S}}_{E}(z)$) höheren Durchsatzes;
   - einen Schritt der Bestimmung (108) einer Korrekturfilterfunktion ausgehend vom rekonstruierten Kerndurchsatz-Signal ($\tilde{\mathbf{S}}_{Mic}(z)$);
   - einen Schritt der Anwendung (106) der Korrekturfilterfunktion an das Differenzsignal, um einen Korrekturterm zu erhalten;

**17**

- einen Schritt der Synthese eines rekonstruierten korrigierten Signals höheren Durchsatzes durch Kombination des Korrekturterms und eines der rekonstruierten Signale ($\tilde{\mathbf{S}}_{Mic}(z)$, $\tilde{\mathbf{S}}_{E}(z)$).

7. Verfahren nach Anspruch 6, **dadurch gekennzeichnet, dass** der Korrekturterm an das rekonstruierte Kerndurchsatz-Signal angewendet wird.

8. Verfahren nach Anspruch 6, **dadurch gekennzeichnet, dass** der Korrekturterm an das rekonstruierte Signal höheren Durchsatzes angewendet wird.

9. Decodierverfahren nach Anspruch 6, **dadurch gekennzeichnet, dass** es einen Schritt des Empfangs einer Einfügungsinformation von Bits bei der Codierung aufweist, und dass im Fall einer Einfügungsinformation von K Bits ein Schritt der Maskierung der K eingefügten Bits vor dem ersten Schritt der inversen Kerndurchsatz-Quantisierung durchgeführt wird.

10. Codierer eines Eingangs-Audiosignals (S(z)), der ein Kombinationsmodul, das das Eingangs-Audiosignal mit einem Gegenkopplungs-Zwischensignal kombiniert, wodurch ein verändertes Eingangssignal geformt wird, und ein Modul einer Durchsatz-skalierbaren Quantisierung (91) des veränderten Eingangssignals aufweist, das einen Binärrahmen von Quantisierungsindices eines vorbestimmten Durchsatzes liefert, der weiter aufweist:

   - ein Modul zur inversen Quantisierung (93) eines Teils der Quantisierungsindices des Binärrahmens entsprechend den Indices eines geringeren Durchsatzes als der vorbestimmte Durchsatz, um ein rekonstruiertes Signal ($\tilde{\mathbf{S}}_{Mic}(z)$) zu bestimmen;
   - ein Modul zur Bestimmung (94) eines Quantisierungsrauschens ($Q_{MIC}(z)$), das mindestens von den Modulen der Quantisierung und der inversen Quantisierung in Kaskade stammt;
   - ein Modul zur Bestimmung (111) einer Filterfunktion des Quantisierungsrauschens ausgehend von dem rekonstruierten Signal ($\tilde{\mathbf{S}}_{Mic}(z)$); und
   - ein Filtermodul, das die Filterfunktion an das Quantisierungsrauschen anwenden kann (33), um das Gegenkopplungs-Zwischensignal zu erhalten.

11. Decodierer eines Audiosignals, der aufweist:

   - ein erstes Modul inverser Quantisierung (105), das Quantisierungsindices eines ersten Durchsatzes, Kerndurchsatz genannt, decodiert, um ein rekonstruiertes Signal $\tilde{\mathbf{S}}_{Mic}(z)$ zu formen;
   - ein zweites Modul inverser Quantisierung, das Quantisierungsindices eines zweiten Durchsatzes höher als der Kerndurchsatz decodiert, das abhängig von dem beim Decodieren empfangenen Durchsatz angewendet wird, um ein rekonstruiertes Signal höheren Durchsatzes zu bilden,
   der weiter aufweist
   - ein Modul zum Erhalt eines Differenzsignals ($Q_{F}(z)$) zwischen dem rekonstruierten Kerndurchsatz-Signal ($\tilde{\mathbf{S}}_{Mic}(z)$) und dem rekonstruierten Signal ($\tilde{\mathbf{S}}_{E}(z)$) höheren Durchsatzes;
   - ein Modul zur Bestimmung (108) einer Korrekturfilterfunktion ausgehend vom rekonstruierten Kerndurchsatz-Signal ($\tilde{\mathbf{S}}_{Mic}(z)$);
   - ein Filtermodul, das die Korrekturfilterfunktion an das Differenzsignal anwenden kann (106), um einen Korrekturterm zu erhalten;
   - ein Modul zur Synthese eines rekonstruierten korrigierten Signals höheren Durchsatzes, das den Korrekturterm und eines der rekonstruierten Signale ($\tilde{\mathbf{S}}_{Mic}(z)$, $\tilde{\mathbf{S}}_{E}(z)$) kombinieren kann.

12. Computerprogramm, das dazu bestimmt ist, in einem Speicher eines Codierers oder eines Decodierers und/oder auf einem Speicherträger gespeichert zu werden, der fähig ist, mit einem Lesegerät des Codierers oder des Decodierers zusammenzuwirken, das Codeanweisungen aufweist, die für die Durchführung der Schritte des Codierverfahrens nach einem der Ansprüche 1 bis 5 und/oder des Decodierverfahrens nach einem der Ansprüche 6 bis 8 geeignet sind, wenn das Programm von einem Prozessor des Codierers oder des Decodierers ausgeführt wird.

Fig.1 (Etat de l'art)

**Fig.2 (Etat de l'art)**

**Fig.2b**

$\bar{S}_{Mic}(z)$

14

12

$Q_{MIC}^{-1}$

$I'_{MIC}$

11

32

$I_{MIC}$

$Q_{MIC}^{-1}$

30

31

$\bar{S}_{Mic}(z)$

33

$Q_{MIC}$

35

34

$S(z)$

**Fig.3**

Fig.4

Fig.5

EP 2 171 713 B1

EP 2 171 713 B1

**Fig.6**

E60 — $s(n)$ $n = 0, ..., N-1$

E61

E62 — Cor(k)

E63 — Levinson

E64 — $\dfrac{1}{1 - A_{gP}(z)}$

E65 — $\dfrac{1 - A_{g1P}(z)}{1 - A_{g2P}(z)}$

**Fig.7**

E70 — $s(n)$ $n = 0, ..., N-1$

E71

E72 — M(z)

E73 — FFT$^{-1}$

E74 — Levinson

E75 — $\dfrac{1}{1 - A_{gP}(z)}$

**Fig.8**

E80 — $s(n)$ $n = 0, ..., N-1$

E81

E82 — M(z)

E83 — $1/(M(z) + \varepsilon)$

E84 — FFT$^{-1}$

E85 — Levinson

E86 — $1 - A_{gP}(z)$

**Fig.9**

**Fig.10**

EP 2 171 713 B1

**Fig.11**

Fig.12

EP 2 171 713 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 033405 A
- EP 0466190 A
- EP 0632597 A

**Littérature non-brevet citée dans la description**

- **J.Makhoul ; M.Berouti.** Adaptive noise spectral shaping and entropy coding in prédictive coding of speech. *IEEE Trans. ASSP,* Juin 1979, vol. 27-3
- **J. H. Chen.** Novel codec structures for noise feedback coding of speech. *Proc. Of ICASSP,* 2006, 681-684
- **Y. Mahieux ; J. P. Petit.** High quality audio transform coding at 64 kbit/s. *IEEE Trans. on Com.,* Novembre 1994, vol. 42-11